# FASCICULE DE BREVET EUROPEEN

(11) **EP 1 381 806 B1**
(45) Date de publication et mention de la délivrance du brevet: **18.08.2004**
(21) Numéro de dépôt: 02735462.0
(22) Date de dépôt: 19.04.2002
(51) Int. Cl.: F16L 37/42

(54) **DISPOSITIF DE RACCORDEMENT AUTO-OBTURANT ET EMBOUT POUR CELUI-CI**
SELBSTSCHLIESSENDE ANSCHLUSSVORRICHTUNG UND ENDSTÜCK DAFÜR
SELF-CLOSING CONNECTING DEVICE AND CONNECTING PIECE THEREFOR

(30) Priorité: 26.04.2001 FR 0105653
(43) Date de publication de la demande: 21.01.2004
(73) Titulaire: LEGRIS SA, 35000 Rennes (FR)
(72) Inventeur: QUERE, Jean-Luc, F-35170 BRUZ (FR); GOILOT, Frédéric, F-35000 RENNES (FR)
(74) Mandataire: Lavialle, Bruno
(86) Numéro de dépôt international: PCT/FR2002/001354
(87) Numéro de publication internationale: WO 2002/088591

(56) Documents cités:
- EP-A- 0 800 031
- EP-A- 1 182 391
- FR-A- 2 535 827
- GB-A- 1 554 660
- US-A- 2 265 267

## Description

La présente invention concerne un embout pour dispositif de raccordement auto-obturant et un dispositif de raccordement auto-obturant correspondant. Un tel dispositf est destiné au raccordement l'un à l'autre de deux éléments d'un circuit de transport de fluide sous pression, tel que des extrémités de conduite ou plus généralement un organe récepteur de fluide comme un réservoir à un organe émetteur de fluide tel qu'une pompe.

De nombreuses structures de dispositifs de raccordement de ce type sont connues.

Un tel dispositif de raccordement comprend généralement un corps tubulaire qui comporte un canal interne axialement divisé en une première section agencée pour recevoir de façon étanche une extrémité de conduite solidaire de l'un des éléments à relier et une deuxième section dans laquelle est rapporté un embout qui est agencé pour permettre le raccordement ultérieur de l'autre élément à relier. Le corps comprend généralement entre ces deux sections du canal interne un épaulement interne formant un siège de clapet agencé pour coopérer avec un clapet monté dans le canal interne du côté de l'embout pour coulisser entre une position d'obturation dans laquelle le clapet est appliqué de façon étanche contre le siège de clapet et une position d'ouverture dans laquelle le clapet est écarté du siège de clapet pour délimiter un passage pour le fluide. Un ressort est de façon classique intercalé entre le clapet et l'embout pour pousser le clapet dans sa position d'obturation contre le siège de clapet. La fabrication de tels dispositifs de raccordement pose des problèmes en ce qui concerne notamment la réalisation du siège de clapet et également le montage du clapet qui est réalisé en mettant successivement en place dans le corps le clapet, le ressort de rappel et l'embout et nécessite des manipulations relativement lentes et peu commodes.

Pour faciliter les opérations de montage, il est connu de réaliser des sous-ensembles incorporant le clapet, le ressort de rappel et le siège de clapet. Le montage est alors réalisé en introduisant d'abord ce sous-ensemble dans le canal interne du corps puis l'embout qui vient immobiliser définitivement le sous-ensemble dans le corps.

Par l'invention, on entend proposer une solution alternative à celles ci-dessus énoncées, permettant de simplifier le montage du dispositif de raccordement.

A cet effet, on prévoit, selon l'invention, un embout tubulaire pour dispositif de raccordement auto-obturant, qui comporte une extrémité de raccordement à un organe, est pourvu extérieurement de moyens de son immobilisation axiale dans un logement du dispositif de raccordement, et est équipé intérieurement d'un clapet monté pour coulisser par rapport à un siège de clapet entre des positions d'obturation et d'ouverture et d'un ressort interposé entre un épaulement interne de l'embout et le clapet pour pousser le clapet dans sa position d'obturation contre le siège de clapet.

Ainsi, le siège de clapet, le clapet, le ressort de rappel et l'embout peuvent être prémontés de manière simple pour former un sous-ensemble qu'il suffit de fixer dans le corps tubulaire du dispositif de raccordement. Les opérations de montage sont dès lors particulièrement simples et rapides.

L'invention a également pour objet un dispositif de raccordement auto-obturant, comportant un corps dans lequel est ménagé un canal interne, et un embout du type précité qui est rapporté dans une section du canal interne.

D'autres avantages de l'invention ressortiront à la lecture de la description qui suit d'un mode de réalisation particulier de l'invention.

Il sera fait référence aux dessins annexés, parmi lesquels :
- la figure 1 est une vue en coupe longitudinale d'un dispositif de raccordement conforme à l'invention, la demi-vue supérieure montrant le clapet en position d'ouverture et la demi-vue inférieure montrant le clapet en position d'obturation,
- la figure 2 est une vue en élévation du clapet de ce dispositif de raccordement.

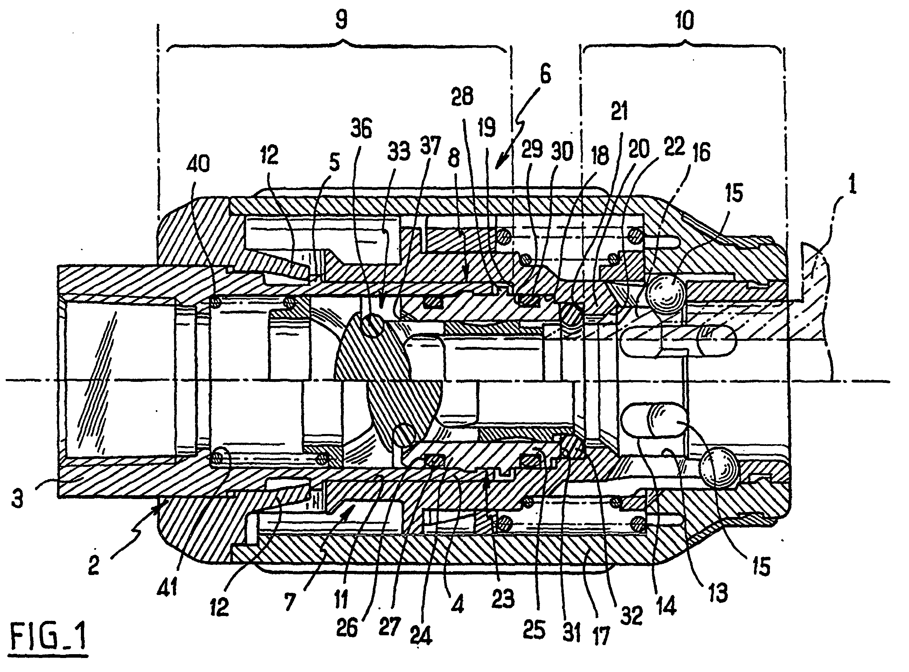

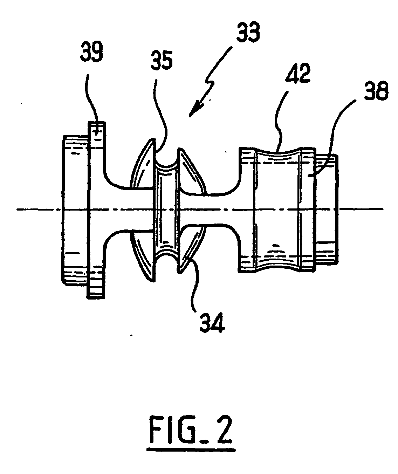

En référence aux figures 1 et 2, le dispositif de raccordement conforme à l'invention est destiné à assurer la connexion d'un embout 1 (représenté en traits mixtes à la figure 1), par exemple solidaire d'une extrémité de conduite non visible sur les figures, et d'un organe tel qu'une autre conduite, un organe émetteur de fluide comme une pompe ou un organe récepteur de fluide comme un réservoir.

L'organe est destiné à être associé à un embout généralement désigné en 2, tubulaire, qui comprend une portion d'extrémité 3 taraudée pour recevoir une partie correspondante de l'organe et une portion d'extrémité opposée 4 rapportée dans le dispositif de raccordement généralement désigné en 6. La portion d'extrémité 3 peut être pourvue de moyens de raccordement d'un autre type, comme des moyens de connexion instantanés, des moyens d'encliquetage... La portion d'extrémité 4 est pourvue extérieurement d'un redan annulaire 5 destiné à coopérer avec des moyens de retenue du dispositif de raccordement.

Le dispositif de raccordement 6 comprend un corps tubulaire portant la référence générale 7 qui délimite un canal interne, généralement désigné en 8, axialement divisé en une section 9 de raccordement à l'organe et une section 10 de raccordement à l'embout 1. Les section 9 et 10 sont respectivement disposées en amont et en aval par rapport à un sens de circulation du fluide dans le dispositif de raccordement.

La section 9 comprend un chambrage d'extrémité 11 qui reçoit l'embout 2 et qui comporte les moyens de retenue de l'embout 2. Ces moyens de retenue sont visibles sur la figure 1 et comprennent ici des pattes élastiques 12 déformables entre un état déformé dans lequel l'extrémité libre de la patte élastique 12 est escamotée du chambrage d'extrémité 11 pour laisser passer le redan annulaire 5 de l'embout 2 lors de sa mise en place dans le corps tubulaire 7, et un état de repos dans lequel l'extrémité libre de la patte élastique 12 est en saillie dans le chambrage d'extrémité 11 pour venir en appui derrière le redan annulaire 5 et s'opposer à l'extraction de l'embout 2. I1 est bien entendu que les moyens de retenue peuvent être de tout type apte à assurer l'immobilisation axiale d'un embout dans le corps tubulaire 7 tels qu'un taraudage.

La section de raccordement 10 est connue en elle-même. La section de raccordement 10 délimite un chambrage d'extrémité 13 pour recevoir l'embout 1. Le chambrage d'extrémité 13 est pourvu intérieurement de moyens à connexion instantanés pour assurer le raccordement étanche de l'embout 1 dans le corps tubulaire 7. Ces moyens comprennent ici des lumières longitudinales 14 recevant des billes 15 mobiles entre une position en saillie dans le chambrage d'extrémité 13, dans laquelle elles sont destinées à saillir derrière un bourrelet externe 16 de l'embout 1, et une position escamotée. Une bague de verrouillage 17 de type connu en soi est montée pour pivoter sur le corps tubulaire 7 entre une position de verrouillage et une position de déverrouillage décalées angulairement l'une par rapport à l'autre. La bague de verrouillage 17 comprend, pour chaque bille, deux logements qui sont également décalés angulairement l'un par rapport à l'autre pour recevoir la bille concernée dans chacune de ses positions et qui sont reliés par une rampe assurant le guidage des billes entre leurs deux positions. Des moyens de rappel élastiques de la bague de verrouillage 17 dans sa position verrouillée sont de préférence montés entre la bague de verrouillage et le corps tubulaire 7. Ces moyens de raccordement étant connus en eux-mêmes, ils ne seront pas plus détaillés ici. Bien entendu, d'autres moyens de raccordement peuvent être utilisés, comme par exemple une bague de verrouillage mobile radialement entre une position de verrouillage dans laquelle la bague a une portion de circonférence interne en saillie dans le chambrage d'extrémité 13 et une position de déverrouillage dans laquelle cette portion de circonférence interne est escamotée du chambrage d'extrémité 13. Des moyens de raccordement à griffes sont également utilisables.

Les chambrages d'extrémité 11 et 13 sont reliés par un chambrage intermédiaire 18 relié aux chambrages d'extrémité respectivement par un épaulement 19 et par un redan annulaire 20 délimitant un épaulement amont 21 et un épaulement aval 22. L'épaulement aval 22 est destiné à coopérer avec le redan annulaire externe 16 pour former une butée à l'enfoncement de l'embout 1 dans le corps tubulaire 7.

Le dispositif de raccordement est un dispositif auto-obturant qui comprend un clapet monté pour coulisser par rapport à un siège de clapet entre une position d'obturation dans laquelle le clapet est appliqué de façon étanche contre le siège de clapet et une position d'ouverture dans laquelle le clapet est écarté du siège de clapet pour délimiter un passage pour le fluide.

Le clapet, qui sera décrit ultérieurement, est associé à une chemise de guidage généralement désignée en 23 qui est montée dans la portion d'extrémité 4 de l'embout 2.

La chemise de guidage 23 comprend une portion d'extrémité amont 24 et une portion d'extrémité aval 25.

La portion d'extrémité amont 24 est reçue dans la portion d'extrémité 4 de l'embout 2 et est pourvue extérieurement d'une gorge 26 recevant un joint d'étanchéité annulaire 27 en contact étroit avec la surface intérieure de l'embout 2 et de moyens d'encliquetage de la chemise de guidage 23 dans l'embout 2. Ces moyens d'encliquetage sont ici constitués de crampons en saillie de la surface extérieure de la portion d'extrémité amont 24 qui coopèrent avec des renfoncements correspondants de la surface intérieure de l'embout 2. La fixation de la chemise de guidage dans l'embout 2 peut être réalisé par tout moyen apte à assurer une immobilisation axiale de la chemise de guidage.

La portion d'extrémité aval 25 s'étend en saillie de la portion d'extrémité 4 de l'embout 2 et est reçue dans le chambrage intermédiaire 18. La portion d'extrémité aval 25 est pourvue extérieurement d'un redan annulaire 28 qui s'étend entre la face terminale de la portion d'extrémité 4 de l'embout 2 et l'épaulement amont 19 pour former une butée à l'enfoncement de la chemise de guidage 23 dans la portion d'extrémité 4 et d'une gorge 29 qui reçoit un joint d'étanchéité annulaire 30 en contact étroit avec la surface intérieure du chambrage intermédiaire 18. La face terminale 31 de cette portion d'extrémité aval 25 délimite avec l'épaulement amont 21 du redan annulaire 20 un logement recevant un joint annulaire d'étanchéité 32 ayant un diamètre interne inférieur au diamètre externe de l'embout 1.

Le clapet, généralement désigné en 33, comporte un obturateur 34 monté dans l'embout 2 en amont de la chemise de guidage 23 et pourvu d'une gorge externe 35 recevant un joint annulaire d'étanchéité 36 qui fait saillie de cette gorge pour venir en contact étroit avec une surface tronconique concave 37 de la portion d'extrémité amont 24 de la chemise de guidage 23 lorsque le clapet 33 est en position d'obturation. La surface tronconique concave 37 forme ainsi le siège du clapet 33. On remarquera que le flanc amont de la gorge externe 35 s'étend en saillie de la moitié interne du joint d'étanchéité 36 pour notamment fermement maintenir le joint d'étanchéité 36 contre le siège de clapet lorsque le clapet 33 est dans sa position d'obturation en empêchant que ce joint ne s'échappe de la gorge.

L'obturateur 34 est prolongé en aval par une queue 38 tubulaire et ajourée qui est reçue à coulissement dans la chemise de guidage 23 pour faire saillie au-delà de celle-ci pour coopérer avec une face terminale de l'embout 1 de telle manière que, lors de l'introduction de l'embout 1 dans le corps tubulaire 7, l'embout 1 amène le clapet 33 dans sa position d'ouverture. On remarquera que la queue 38 est pourvue d'une gorge externe 42 qui divise la surface extérieure de la queue en deux portées espacées de manière à limiter les frottements tout en conservant une longueur de guidage importante. Cette gorge peut en outre être utilisée pour y réaliser un marquage en relief.

L'obturateur 34 est associé en amont à une bague 39 montée pour coulisser dans l'embout 2 et pour former un épaulement d'appui d'une extrémité d'un ressort 40 ayant une extrémité opposée en appui contre un épaulement interne 41 de l'embout 2.

Ainsi, l'embout 2, le clapet 33, le ressort 40, la chemise de guidage 23 et les éléments attenants forment un sous-ensemble qui peut être assemblé préalablement à sa mise en place dans le corps. Ceci facilite le montage du dispositif de raccordement selon l'invention.

## Revendications

1. Embout tubulaire pour dispositif de raccordement auto-obturant, qui comporte une extrémité (3) de raccordement à un organe et est pourvu extérieurement de moyens (5) de son immobilisation axiale dans un logement du dispositif de raccordement, et en ce qu'il est équipé intérieurement d'un clapet (33) monté pour coulisser par rapport à un siège de clapet (37) entre des positions d'obturation et d'ouverture, et d'un ressort (40) interposé entre un épaulement interne (41) de l'embout et le clapet pour pousser le clapet dans sa position d'obturation contre le siège de clapet.

2. Embout selon la revendication 1, **caractérisé en ce que** l'un de l'épaulement interne (41) et du siège de clapet (37) est solidaire d'une chemise (23) rapportée dans l'embout.

3. Embout selon la revendication 2, **caractérisé en ce que** la chemise (23) est encliquetée dans l'embout (2).

4. Embout selon la revendication 2 ou la revendication 3, **caractérisé en ce que** la chemise (23) est agencée pour former une chemise de guidage du clapet (33) et est pourvue d'un épaulement interne (37) formant le siège de clapet.

5. Embout selon la revendication 4, **caractérisé en ce que** la chemise (23) comprend une portion (25) qui s'étend en saillie d'une extrémité (4) de l'embout (2) opposée à l'extrémité (3) de raccordement à l'organe et qui est pourvue extérieurement d'un joint d'étanchéité (30).

6. Embout selon la revendication 4 ou la revendication 5, **caractérisé en ce que** le clapet (33) est prolongé en aval par une queue (38) tubulaire ajourée reçue à coulissement dans la chemise (23).

7. Embout selon la revendication 6, **caractérisé en ce que** la queue (38) est pourvue d'une gorge externe (42) divisant une surface extérieure de la queue en deux portées espacées.

8. Embout selon l'une quelconque des revendications précédentes, **caractérisé en ce que** le clapet (33) est pourvu d'une gorge externe (35) recevant un joint d'étanchéité annulaire (36) qui fait saillie de cette gorge pour venir en contact étroit avec le siège de clapet (37) lorsque le clapet est en position d'obturation.

9. Embout selon la revendication 8, **caractérisé en ce que** le siège de clapet (37) est formé par une surface tronconique concave.

10. Embout selon l'une quelconque des revendications précédentes, **caractérisé en ce que** le clapet comprend en amont une bague (39) d'appui du ressort (40).

11. Dispositif de raccordement auto-obturant, comportant un corps (7) dans lequel est ménagé un canal interne (8), **caractérisé en ce que** le dispositif de raccordement comporte un embout (2) selon l'une quelconque des revendications précédentes qui est rapporté dans une section (9) du canal interne.

12. Dispositif de raccordement selon la revendication 11, **caractérisé en ce que** l'embout (2) est encliqueté dans le corps (7).

## Patentansprüche

1. Rohrförmiges Ansatzstück für eine selbstschließende Verbindungsvorrichtung, wobei das Ansatzstück ein Ende (3) zur Verbindung mit einem Element hat und außen mit Mitteln (5) für seine axiale Blockierung in einer Aufnahme der Verbindungsvorrichtung versehen ist und wobei das Ansatzstück innen mit einem Ventil (33) ausgerüstet ist, das relativ zu einem Ventilsitz (37) zwischen einer Schließstellung und einer Offenstellung verschiebbar gelagert ist, sowie mit einer Feder (40), die zwischen einer inneren Schulter (41) des Ansatzstückes und dem Ventil angeordnet ist, um das Ventil in dessen Schließstellung auf den Ventilsitz zu drücken.

2. Ansatzstück nach Anspruch 1, **dadurch gekennzeichnet, daß** entweder die innere Schulter (41) oder der Ventilsitz (37) fest mit einer in das Ansatzstück eingesetzten Hülse (23) verbunden ist.

3. Ansatzstück nach Anspruch 2, **dadurch gekennzeichnet, daß** die Hülse (23) in das Ansatzstück (2) eingerastet ist.

4. Ansatzstück nach Anspruch 2 oder Anspruch 3, **dadurch gekennzeichnet, dass** die Hülse (23) derart ausgebildet ist, dass sie eine Hülse zur Führung des Ventils (33) bildet und mit einer inneren Schulter (37) versehen ist, die den Ventilsitz bildet.

5. Ansatzstück nach Anspruch 4, **dadurch gekennzeichnet, dass** die Hülse (23) einen Teil (25) hat, der über ein dem Ende (3) zur Verbindung mit dem Element entgegengesetztes Ende (4) des Ansatzstückes (2) vorsteht und außen mit einer Dichtung (30) versehen ist.

6. Ansatzstück nach Anspruch 4 oder Anspruch 5, **dadurch gekennzeichnet, dass** das Ventil (33) stromabwärts durch ein durchbrochenes, rohrförmiges Endstück (38) verlängert ist, das verschiebbar in der Hülse (23) aufgenommen ist.

7. Ansatzstück nach Anspruch 6, **dadurch gekennzeichnet, dass** das Endstück (38) mit einer Außennut (42) versehen ist, die eine Außenfläche des Endstückes in zwei zueinander beabstandete Auflageflächen teilt.

8. Ansatzstück nach einem der vorhergehenden Ansprüche, **dadurch gekennzeichnet, dass** das Ventil (33) mit einer Außennut (35) versehen ist, die einen Dichtungsring (36) aufnimmt, der über diese Nut vorsteht, um in engen Kontakt mit dem Ventilsitz (37) zu kommen, wenn das Ventil in Schließstellung ist.

9. Ansatzstück nach Anspruch 8, **dadurch gekennzeichnet, dass** der Ventilsitz (37) aus einer konkaven, kegelstumpfförmigen Fläche gebildet ist.

10. Ansatzstück nach einem der vorhergehenden Ansprüche, **dadurch gekennzeichnet, dass** das Ventil stromaufwärts einen Stützring (39) zum Stützen der Feder (40) hat.

11. Selbstschließende Verbindungsvorrichtung, umfassend ein Gehäuse (7), in dem ein Innenkanal (8) ausgebildet ist, **dadurch gekennzeichnet, dass** die Verbindungsvorrichtung ein Ansatzstück (2) gemäß einem der vorhergehenden Ansprüche enthält, das in einen Abschnitt (9) des Innenkanals eingesetzt ist.

12. Verbindungsvorrichtung nach Anspruch 11, **dadurch gekennzeichnet, dass** das Ansatzstück (2) in das Gehäuse (7) eingerastet ist.

## Claims

1. A tubular endpiece for a self-closing coupling device, the endpiece (2) that includes one end (3) for coupling to a member and is provided on the outside with means (5) for preventing it from moving axially in a housing of the coupling device, and that is fitted internally with a valve slide (33) mounted to slide relative to a valve seat (37) between a closed position and an open position, and a spring (40) interposed between an internal shoulder (41) of the endpiece and the valve slide in order to urge the valve slide into its closed position against the valve seat.

2. An endpiece according to claim 1, **characterized in that** one of the internal shoulder (41) and the valve seat (37) is secured to a sleeve (23) fitted in the endpiece.

3. An endpiece according to claim 2, **characterized in that** the sleeve (23) is snap-fastened in the endpiece (2).

4. An endpiece according to claim 2 or claim 3, **characterized in that** the sleeve (23) is arranged to form a guide sleeve for the valve slide (33) and is provided with an internal shoulder (37) forming the valve seat.

5. An endpiece according to claim 4, **characterized in that** the sleeve (23) includes a portion (25) which projects from an end (4) of the endpiece (2) opposite from the end (3) for coupling to the member, and which is provided on the outside with a sealing ring (30).

6. An endpiece according to claim 4 or claim 5, **characterized in that** the valve slide (33) is extended downstream by a perforated tubular tail (38) slidably received in the sleeve (33).

7. An endpiece according to claim 6, **characterized in that** the tail (38) is provided with an outer groove (42) subdividing an outside surface of the tail into two spaced-apart bearing surfaces.

8. An endpiece according to any preceding claim, **characterized in that** the valve slide (33) is provided with an outer groove (35) receiving a sealing ring (36) which projects from said groove so as to come into close contact with the valve seat (37) when the valve slide is in the closed position.

9. An endpiece according to claim 8, **characterized in that** the valve seat (37) is formed by a concave frustoconical surface.

10. An endpiece according to any preceding claim, **characterized in that** the upstream end of the valve slide includes a bearing ring (39) for the spring (40).

11. A self-closing coupling device comprising a body (7) in which an internal channel (8) is formed, the coupling device being **characterized in that** it includes an endpiece (2) according to any preceding claim fitted in a section (9) of the internal channel.

12. A coupling device according to claim 11, **characterized in that** the endpiece (2) is snap-fastened in the body (7).
